# EUROPEAN PATENT SPECIFICATION

(11) **EP 4 210 396 B1**
(45) Date of publication and mention of the grant of the patent: **12.08.2026**
(21) Application number: 22150332.9
(22) Date of filing: 05.01.2022
(51) Int. Cl.: H04W 48/18, H04W 36/00, H04W 36/14, H04W 76/11, H04W 76/12, H04W 88/06

(54) **METHOD AND APPARATUS TO ASSIGN A NETWORK SLICE FOR A SESSION RELATED TO A LEGACY SYSTEM**
VERFAHREN UND VORRICHTUNG ZUR ZUWEISUNG EINER NETZWERKSCHEIBE FÜR EINE SITZUNG IN BEZUG AUF EIN ALTSYSTEM
PROCÉDÉ ET APPAREIL POUR ATTRIBUER UNE TRANCHE DE RÉSEAU POUR UNE SESSION ASSOCIÉE À UN SYSTÈME EXISTANT

(43) Date of publication of application: 12.07.2023
(73) Proprietor: Nokia Technologies Oy, 02610 Espoo (FI)
(72) Inventor: WON, Sung Hwan, Flower Mound, TX 75028 (US); GKATZIKIS, Lazaros, 92130 Issy-les-Moulineaux (FR)
(74) Representative: Samson & Partner Patentanwälte mbB

(56) References cited:
- "3rd Generation Partnership Project; Technical Specification Group Core Network and Terminals; Non-Access-Stratum (NAS) protocol for 5G System (5GS); Stage 3; (Release 17)", 3 January 2022 (2022-01-03), XP052096682, Retrieved from the Internet <URL:https://ftp.3gpp.org/tsg_ct/WG1_mm-cc-sm_ex-CN1/TSGC1_133e/Draft%20specs%20after%20CT%2394e/Uploaded/draft-24501-h50_v3_clean.zip draft-24501-h50_v3_clean.docx> [retrieved on 20220103]
- "3rd Generation Partnership Project; Technical Specification Group Core Network and Terminals; User Equipment (UE) policies for 5G System (5GS); Stage 3 (Release 17)", no. 20211201, 17 December 2021 (2021-12-17), XP052096686, Retrieved from the Internet <URL:https://ftp.3gpp.org/tsg_ct/WG1_mm-cc-sm_ex-CN1/TSGC1_133e/Draft%20specs%20after%20CT%2394e/Uploaded/draft-24526-h50-rm_r1.zip draft_24526-h50-cl.doc> [retrieved on 20211217]
- "3rd Generation Partnership Project; Technical Specification Group Services and System Aspects; Policy and charging control framework for the 5G System (5GS); Stage 2 (Release 16)", 23 December 2021 (2021-12-23), XP052096002, Retrieved from the Internet <URL:https://ftp.3gpp.org/3guInternal/3GPP_ultimate_versions_to_be_transposed/sentToDpc/23503-gb0.zip 23503-gb0.docx> [retrieved on 20211223]
- "3rd Generation Partnership Project; Technical Specification Group Core Network and Terminals; Study on enhanced IP Multimedia Subsystem (IMS) to 5GC integration Phase 2; CT WG1 aspects (Release 17)", no. V2.0.0, 30 November 2021 (2021-11-30), pages 1 - 20, XP052082996, Retrieved from the Internet <URL:https://ftp.3gpp.org/Specs/archive/23_series/23.700-10/23700-10-200.zip 23700-10-200.docx> [retrieved on 20211130]
- NOKIA ET AL: "Provisioning an S-NSSAI via the PDN CONNECTIVITY REQUEST message", vol. CT WG1, no. E-meeting; 20220217 - 20220225, 10 February 2022 (2022-02-10), XP052105896, Retrieved from the Internet <URL:https://ftp.3gpp.org/tsg_ct/WG1_mm-cc-sm_ex-CN1/TSGC1_134e/Docs/C1-221264.zip C1-221264_was_0034_sol_2_IMS_HN_DN_to_PGW_PCO.docx> [retrieved on 20220210]

## Description

### FIELD

The subject disclosure generally relates to wireless communication systems and more particularly, to wireless communication systems allowing to assign a network slice for a session. Yet more particularly, the subject disclosure provides methods and apparatuses for assigning a network slice for a session established in a legacy system.

### BACKGROUND

Wireless telecommunication systems are under constant development. There is a constant need for higher data rates and high quality of service. Reliability requirements are constantly rising and ways and means to ensure reliable connections and data traffic while keeping transmission delays minimal are constantly under development.

Developing networks enable new services to customers. One service is network slicing, which enables offering connectivity, quality of service and data processing solutions tailored to specific customers' requirements. A network slice is a logical end-to-end virtual network that can be dynamically created and that provides specific capabilities and characteristics. Multiple network slices may be created on top of a common shared physical network infrastructure to run services that may have different requirements on latency, reliability, throughput and mobility.

The use of network slices requires identification of individual network slices with the networks. So, there is a need for assigning a network slice for a session or a data connection, specifically in case the session or data connection was established in a legacy system.

Aspects related to the subject disclosure are described in:
- "3rd Generation Partnership Project; Technical Specification Group Core Network and Terminals; Non-Access-Stratum (NAS) protocol for 5G System (5GS); Stage 3 (Release 17)", 3GPP TS 24.501, V17.5.0
- "3rd Generation Partnership Project; Technical Specification Group Core Network and Terminals; User Equipment (UE) policies for 5G System (5GS); Stage 3 (Release 17)", 3GPP TS 24.526, V17.5.0
- "3rd Generation Partnership Project; Technical Specification Group Core Services and System Aspects; Policy and charging control framework for the 5G System (5GS); Stage 2 (Release 16)", 3GPP TS 23.503, V16.11.0
- "3rd Generation Partnership Project; Technical Specification Group Core Network and Terminals; Study on enhanced IP Multimedia Subsystem (IMS) to 5GC integration Phase 2; CT WG1 aspects (Release 17)", 3GPP TR 23.700-10, V2.0.0.

NOKIA et al.: "Provisioning an S-NSSAI via the PDN CONNECTIVITY REQUEST message", 3GPP DRAFT; C1-221264, relates to an S-NSSAI provided to the PGW-C and SMF via PDN CONNECTIVITY REQUEST message.

### SUMMARY

The present invention is defined by the independent claims. The dependent claims define embodiments thereof.

### LIST OF ABBREVIATIONS

In the subject disclosure, the following abbreviations are used and should be understood in accordance with the given definitions:
- 3GPP: 3^{rd} Generation Partnership Project
- 5G: 5^{th} Generation (Mobile Communication Network)
- 5GC: 5G Core
- 5GS: 5G System
- AF: Application Function
- AMF: Access and Mobility Function
- AN: Access Network
- APN: Access Point Name
- BS: Base Station
- CDMA: Code Division Multiple Access
- CN: Core Network
- CP: Control Plane
- DNN: Data Network Name
- eNB: Evolved NodeB
- EPC: Evolved Packet Core
- ePCO: Extended PCO
- EPS: Evolved Packet System
- ETSI: European Telecommunications Standards Institute
- E-UTRAN: Evolved UMTS Terrestrial Radio Access
- FQDN: Full Qualified Domain Name
- IE: Information Element
- IMS: IP Multimedia Subsystem
- IP: Internet Protocol
- LTE: Long Term Evolution
- MME: Mobility Management Entity
- NAS: Non-Access Stratum
- NR: New Radio
- NSSAI: Network Slice Selection Assistance Information
- PCF: Policy Control Function
- PCO: Protocol Configuration Options
- PDN: Packet Data Network
- PDP: Packet Data Protocol
- PGW: PDN Gateway
- PGW-C: PGW Control Function
- PLMN: Public Land Mobile Network
- RAN: Radio Access Network
- RCS: Rich Communication Services
- RRC: Radio Resource Control (Protocol)
- RSD: Route Selection Descriptor
- SGW: Serving Gateway
- SIM: Subscriber Identity Module
- SMF: Session Management Function
- S-NSSAI: Single NSSAI
- TS: Technical Specification
- UE: User Equipment
- URLLC: Ultra-Reliable Low Latency Communication
- URSP: UE Route Selection Policy
- VoNR: Voice over NR

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example communication system comprising a base station and a plurality of communication devices;
FIG. 2 shows a schematic diagram of an example mobile communication device;
FIG. 3 shows a schematic diagram of an example control apparatus;
FIG. 4 illustrates a network slicing scenario; and
FIGS. 5 and 6 illustrate flow charts of methods for assigning a network slice for a session related to a legacy system according to the claimed embodiment.

### DETAILED DESCRIPTION

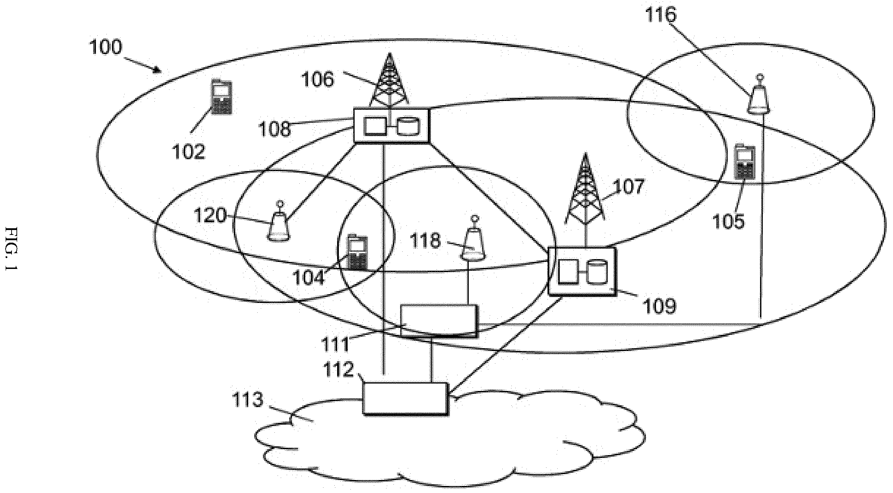

Before explaining the examples in detail, certain general principles of a wireless communication system and mobile communication devices are briefly explained with reference to FIGS. 1 to 3 to assist in understanding the technology underlying the described examples.

In a wireless communication system 100, such as that shown in FIG. 1, mobile communication devices or user equipment (UE) 102, 104, 105 are provided wireless access via at least one base station (e.g., next generation NB, gNB) or similar wireless transmitting and/or receiving node or point. Base stations may be controlled or assisted by at least one appropriate controller apparatus, so as to enable operation thereof and management of mobile communication devices in communication with the base stations. The controller apparatus may be located in a radio access network (e.g., wireless communication system 100) or in a core network (CN) (not shown) and may be implemented as one central apparatus or its functionality may be distributed over several apparatuses. The controller apparatus may be part of the base station and/or provided by a separate entity such as a Radio Network Controller. In FIG. 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In FIG. 1, base stations 106 and 107 are shown as connected to a wider communications network 113 via gateway 112. A further gateway function may be provided to connect to another network.

As used herein, the term "base station" has the full breadth of its ordinary meaning, and at least includes a wireless communication station installed at a fixed location and used to communicate as part of a wireless telephone system or radio system. The communication area (or coverage area) of the base stations may be referred to as a "cell." The base stations and the UEs may be configured to communicate over the transmission medium using any of various radio access technologies (RATs), also referred to as wireless communication technologies, or telecommunication standards described hereinbelow. As illustrated in FIG. 1, while one of the base stations may act as a "serving cell" for UEs, each UE may also be capable of receiving signals from (and possibly within communication range of) one or more other cells (which might be provided by the base stations and/or any other base stations), which may be referred to as "neighboring cells".

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs. The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE Advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labor between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UE(s) exchanging traffic with the DN.

The UPF is controlled by an SMF (Session Management Function) that receives policies from a PCF (Policy Control Function). The CN may also include an AMF (Access & Mobility Function).

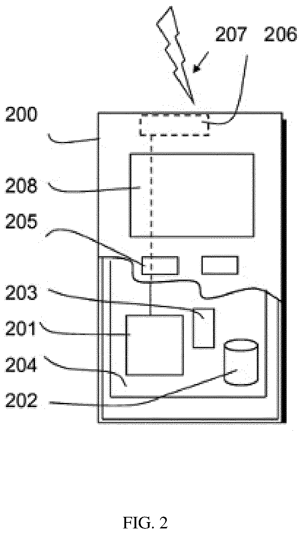

A possible mobile communication device will now be described in more detail with reference to FIG. 2 showing a schematic, partially sectioned view of a communication device 200. Such a communication device is often referred to as user equipment (UE) or terminal device. An appropriate mobile communication device may be provided by any device capable of sending and receiving radio signals. Non-limiting examples comprise a mobile station (MS) or mobile device such as a mobile phone or what is known as a smart phone, a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (e-mail), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

In an industrial application a communication device may be a modem integrated into an industrial actuator (e.g., a robot arm) and/or a modem acting as an Ethernet-hub that will act as a connection point for one or several connected Ethernet devices (which connection may be wired or unwired).

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chip-sets. This feature is denoted by reference 204. The user may control the operation of the mobile device by means of a suitable user interface such as keypad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The communication device 200 may receive signals over an air or radio interface 207 via appropriate apparatus for receiving and may transmit signals via appropriate apparatus for transmitting radio signals. In FIG. 2 transceiver apparatus is designated schematically by block 206. The transceiver apparatus 206 may be provided for example by means of a radio part and associated antenna arrangement. The antenna arrangement may be arranged internally or externally to the mobile device.

The communication device 200 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Generally, the communication device 200 illustrated in FIG. 2 includes a set of components configured to perform core functions. For example, this set of components may be implemented as a system on chip (SOC), which may include portions for various purposes. Alternatively, this set of components may be implemented as separate components or groups of components for the various purposes. The set of components may be coupled (e.g., communicatively; directly or indirectly) to various other circuits of the communication device 200.

The communication device 200 may include at least one antenna in communication with a transmitter and a receiver (e.g., the transceiver apparatus 206). Alternatively, transmit and receive antennas may be separate. The communication device 200 may also include a processor (e.g., the at least one data processing entity 201) configured to provide signals to and receive signals from the transmitter and receiver, respectively, and to control the functioning of the communication device 200. The processor may be configured to control the functioning of the transmitter and receiver by effecting control signaling via electrical leads to the transmitter and receiver. Likewise, the processor may be configured to control other elements of the communication device 200 by effecting control signaling via electrical leads connecting processor to the other elements, such as a display (e.g., display 208) or a memory (e.g., the at least one memory 202). The processor may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, in some examples, the processor may comprise a plurality of processors or processing cores.

The communication device 200 may be capable of operating with one or more air interface standards, communication protocols, modulation types, access types, and/or the like. Signals sent and received by the processor may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the communication device 200 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like). For example, the communication device 200 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the communication device 200 may be capable of operating in accordance with 2.5G wireless communication protocols General Packet Radio Service (GPRS), Enhanced Data GSM Environment (EDGE), and/or the like. Further, for example, the communication device 200 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The communication device 200 may be additionally capable of operating in accordance with 3.9G wireless communication protocols, such as Long-Term Evolution (LTE), Evolved Universal Terrestrial Radio Access Network (E-UTRAN), and/or the like. Additionally, for example, the communication device 200 may be capable of operating in accordance with 4G wireless communication protocols, such as LTE Advanced, 5G, and/or the like as well as similar wireless communication protocols that may be subsequently developed.

It is understood that the processor may include circuitry for implementing audio/video and logic functions of the communication device 200. For example, the processor may comprise a digital signal processor device, a microprocessor device, an analog-to-digital converter, a digital-to-analog converter, and/or the like. Control and signal processing functions of the communication device 200 may be allocated between these devices according to their respective capabilities. The processor may additionally comprise an internal voice coder (VC), an internal data modem (DM), and/or the like. Further, the processor may include functionality to operate one or more software programs, which may be stored in memory. In general, the processor and stored software instructions may be configured to cause the communication device 200 to perform actions. For example, the processor may be capable of operating a connectivity program, such as a web browser. The connectivity program may allow the communication device 200 to transmit and receive web content, such as location-based content, according to a protocol, such as wireless application protocol (WAP), hypertext transfer protocol (HTTP), and/or the like.

The communication device 200 may also comprise a user interface including, for example, an earphone or speaker, a ringer, a microphone, a display, a user input interface, and/or the like, which may be operationally coupled to the processor. The display may, as noted above, include a touch sensitive display, where a user may touch and/or gesture to make selections, enter values, and/or the like. The processor may also include user interface circuitry configured to control at least some functions of one or more elements of the user interface, such as the speaker, the ringer, the microphone, the display, and/or the like. The processor and/or user interface circuitry comprising the processor may be configured to control one or more functions of one or more elements of the user interface through computer program instructions, for example, software and/or firmware, stored on a memory accessible to the processor, for example, volatile memory, non-volatile memory, and/or the like. The communication device 200 may include a battery for powering various circuits related to the mobile terminal, for example, a circuit to provide mechanical vibration as a detectable output. The user input interface may comprise devices allowing the communication device 200 to receive data, such as a keypad (e.g., keypad 206) and/or other input devices. The keypad can also be a virtual keyboard presented on display or an externally coupled keyboard.

The communication device 200 may also include one or more mechanisms for sharing and/or obtaining data. For example, the communication device 200 may include a short-range radio frequency (RF) transceiver and/or interrogator, so data may be shared with and/or obtained from electronic devices in accordance with RF techniques. The communication device 200 may include other short-range transceivers, such as an infrared (IR) transceiver, a Blue-tooth^{™} (BT) transceiver operating using Bluetooth^{™} wireless technology, a wireless universal serial bus (USB) transceiver, a Bluetooth^{™} Low Energy transceiver, a ZigBee transceiver, an ANT transceiver, a cellular device-to-device transceiver, a wireless local area link transceiver, and/or any other short-range radio technology. The communication device 200 and, in particular, the short-range transceiver may be capable of transmitting data to and/or receiving data from electronic devices within the proximity of the apparatus, such as within 10 meters, for example. The communication device 200 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The communication device 200 may comprise memory, such as one or more Subscriber Identity Modules (SIM), one or more Universal Subscriber Identity Modules (USIM), one or more removable User Identity Modules (R-UIM), one or more eUICC, one or more UICC, and/or the like, which may store information elements related to a mobile subscriber. In addition, the communication device 200 may include other removable and/or fixed memory. The communication device 200 may include volatile memory and/or non-volatile memory. For example, the volatile memory may include Random Access Memory (RAM) including dynamic and/or static RAM, on-chip or off-chip cache memory, and/or the like. The non-volatile memory, which may be embedded and/or removable, may include, for example, read-only memory, flash memory, magnetic storage devices, for example, hard disks, floppy disk drives, magnetic tape, optical disc drives and/or media, non-volatile random-access memory (NVRAM), and/or the like. Like volatile memory, the non-volatile memory may include a cache area for temporary storage of data. At least part of the volatile and/or non-volatile memory may be embedded in the processor. The memories may store one or more software programs, instructions, pieces of information, data, and/or the like which may be used by the apparatus for performing operations disclosed herein.

The memories may comprise an identifier, such as an International Mobile Equipment Identification (IMEI) code, capable of uniquely identifying the communication device 200. The memories may comprise an identifier, such as an international mobile equipment identification (IMEI) code, capable of uniquely identifying the communication device 200. In the example embodiment, the processor may be configured using computer code stored at memory to cause the processor to perform operations disclosed herein.

Some of the embodiments disclosed herein may be implemented in software, hardware, application logic, or a combination of software, hardware, and application logic. The software, application logic, and/or hardware may reside on the memory, the processor, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 2, computer-readable medium may comprise a non-transitory computer-readable storage medium that may be any media that can contain or store the instructions for use by or in connection with an instruction execution system, apparatus, or device, such as a computer.

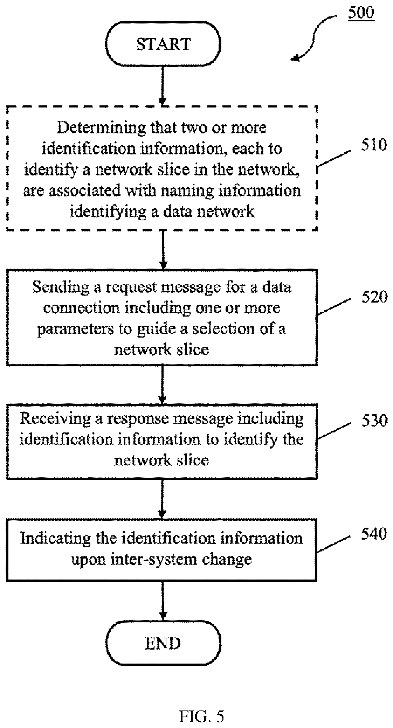

In some embodiments, the communication device 200 (i.e., a user equipment (UE) in a network) comprises the processor (e.g., the at least one data processing entity 201) and the memory (e.g., the at least one memory 202). The memory includes computer program code causing the communication device 200 to perform processing according to the methods described below with reference to FIG. 5.

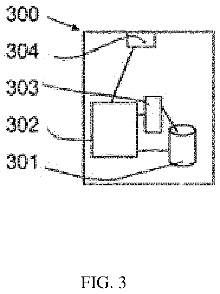

FIG. 3 shows an example embodiment of a control apparatus for a communication system, for example to be coupled to and/or for controlling a station of an access system, such as a RAN node, e.g., a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Generally, the control apparatus 300 has an antenna, which transmits and receives radio signals. A radio frequency (RF) transceiver module, coupled with the antenna, receives RF signals from antenna, converts them to baseband signals and sends them to processor (e.g., the at least one data processing unit 302, 303). RF transceiver also converts received baseband signals from processor, converts them to RF signals, and sends out to antenna. Processor processes the received baseband signals and invokes different functional modules to perform features in control apparatus 300. Memory (e.g., the at least one memory 301) stores program instructions and data to control the operations of the control apparatus 300. In the example of FIG. 3, the control apparatus 300 also includes protocol stack and a set of control functional modules and circuit. PDU session handling circuit handles PDU session establishment and modification procedures. Policy control module that configures policy rules for UE. Configuration and control circuit provides different parameters to configure and control UE of related functionalities including mobility management and session management. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines.

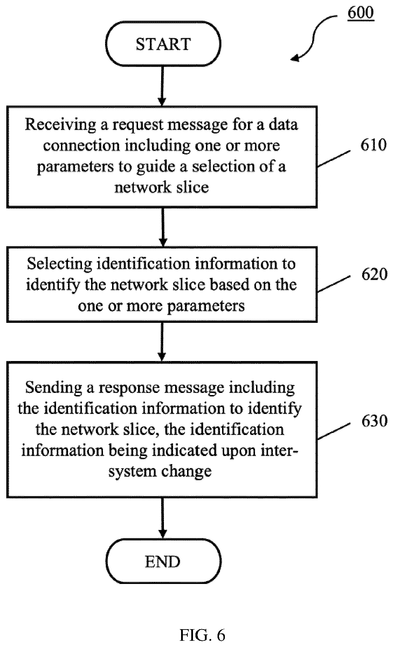

In some embodiments, the control apparatus 300 (i.e., the base station or the wireless transmitting and/or receiving point equipment) comprises the processor (e.g., the at least one data processing unit 302, 303) and the memory (e.g., the at least one memory 301). The memory includes computer program code causing the control apparatus 300 to perform processing according to the method described below with reference to FIG. 6.

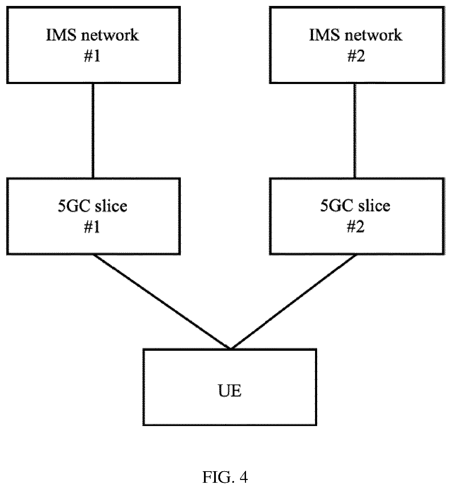

Before referring to FIGS. 4, 5 and 6 and describing the methods for assigning a network slice for a session related to a legacy system according to some embodiments of the subject disclosure, some background information and aspects related to the subject disclosure will be provided.

As mentioned, network slicing is a concept where network resources of an end-to-end connection between a terminal device (i.e., a user equipment, UE) and another end point in a network such as a Public Land Mobile Network (PLMN) are sliced. Similar network slicing may be employed also in private networks. A network slice may be understood as a logical end-to-end network that can be dynamically created and/or modified. The network(s) between the end devices may all be sliced from one end device to the other end device, the slices thus forming logical pipelines within the network(s). Terminal devices may access a slice over a radio interface. A pipeline/slice may serve a particular service type. So far, three different network slice/service types have been standardized: eMBB (slice suitable for the handling of 5G enhanced Mobile Broadband), URLLC (slice suitable for the handling of ultra-reliable low latency communications) and MIoT (slice suitable for the handling of massive Internet of Things). Communications Service Providers (CSPs) are able to define additional network slice/service types if needed. A given terminal device may access to multiple slices over the same Access Network (over the same radio interface, for example).

Thus, network slicing enables a communications service provider to provide dedicated virtual networks over a common network infrastructure. The different virtual or logical networks may be designed to provide different networking characteristics such as different qualities of service (QoS) in order to host services with diverse requirements and service level agreements (SLAs). For example, the virtual networks may be customized to meet specific needs of various applications, services, devices, customers and/or operators. Thus, the network slicing enables provision of different services to the terminal device.

An illustration of a scenario in which a terminal device (i.e., the UE) used two different service provided by two different networks (e.g., IMS networks) is provided by FIG. 4. In this scenario, the UE is connected through two different network slices (e.g., 5GC network slices) to the IMS networks. That is, the UE is connected through 5GC slice #1 to the IMS network #1 and uses a service provided by the IMS network #1 (e.g., RCS). The UE is also connected through 5GC slice #2 to the IMS network #2 and uses a service provided by the IMS network #2 (e.g., VoNG). This allows to customize the network slices for the different services hosted by each of the IMS networks. The scenario shown in FIG. 4 corresponds to the scenario described in 3GPP TR 23.700-10.

Now, the methods for assigning a network slice for a session related to a legacy system according to some embodiments of the subject disclosure will be described.

FIG. 5 illustrates a flow chart of a method for assigning a network slice for a session related to a legacy system according to the claimed embodiment. The method is performed by a terminal device such as a user equipment (UE). For example, the UE may be represented by any one of the mobile communication devices 102, 104, 105 of the wireless communication system 100 as described above with reference to FIG. 1, or the communication device 200 as described above with reference to FIG. 2.

The UE may exploit different services such as Rich Communication Services (RCS), Voice over NR (VoNR), or the like, from two or more (e.g., up to eight) different Internet Protocol (IP) Multimedia Subsystem (IMS) networks. That is, the UE may be connected to the two or more different IMS networks through two or more different network slices (e.g., 5G Core network slices). For example, the UE may have established data connection(s) such as a Packet Data Network (PDN) connection in an Evolved Packet System (EPS) or a Packet Data Unit (PDU) session. The PDN connection(s) or PDU session(s) established by the UE may be associated with a name of an access point (Access Point Name, APN) via which the UE established the PDN connection(s) or the PDU session(s). Across the network slices, a Data Network Name mapped to the APN (or the APN) may be used. When the UE needs to move from the EPS to the 5GS (for example), i.e., in case of an inter-system change from the EPS to the 5GS, the PDN connection(s) or PDU session(s) may need to be transferred and associated within the 5GS.

At block 520, the UE sends a request message for a data connection to the network. The UE is registered to a first system (i.e., a first communication system or legacy system) such as an EPS. In other words, the UE sends the request message at block 520 while the UE is registered to the first system. The data connection may be a PDN connection or a PDU session and the request message sent by the UE may therefore be a request for the PDN connection or the PDU session to the network. The request message includes one or more parameters to guide a selection of a network slice for the data connection at the network. In other words, as it will be discussed in more detail hereinbelow, the network selects the network slice based, at least in part, on the one or more parameters received from the UE. In one example, the UE may send, as the request message, a PDN CONNECTIVITY REQUEST message to the network. Examples of the PDN CONNECTIVITY REQUEST message are defined in 3GPP TS 24.301 (e.g., subclause 8.3.20).

At block 530, the UE receives a response message from the network. The response message includes identification information to identify the network slice for the data connection at the network. The UE is still registered to the first system so that the response message is received by the UE at block 530 while the UE is registered to the first system. As it will be discussed in more detail hereinbelow, the network selects the network slice and sends, to the UE, the identification information which identifies the selected network slice. The identification information may comprise a Single Network Slice Selection Assistance Information (S-NSSAI) which is used to (uniquely) identify the network slice in the network. The S-NSSAI may include type information to indicate a type for the network slice or the service (also referred to as Slice/Service Type, SST) and optionally, differentiator information to differentiate the network slice from other network slices (also referred to as Slice Differentiator, SD). Examples of the S-NSSAI are defined in 3GPP TS 24.501 (e.g., subclause 9.11.2.8). In one example, the UE may receive, as the response message, an ACTIVATE DEFAULT EPS BEARER CONTEXT REQUEST message from the network. Examples of the ACTIVATE DEFAULT EPS BEARER CONTEXT REQUEST message are defined in 3GPP TS 24.301 (e.g., subclause 8.3.6).

In response to receiving the response message with the identification information, the UE uses the identification information for indication, at block 540. More specifically, the UE indicates (e.g., to the network) the identification information upon inter-system change from the first system to a second system (i.e., a second communication system) such as 5GS. That is, the identification information is used to allow identification of the network slice with which the data connection is associated by the network after a change of the registration from the first system to the second system (i.e., in response to an inter-system change from the first system to the second system). The UE may use the identification information in signaling or messaging corresponding to the data connection. That is, the UE may include the identification information in messages to be sent to the network for the data connection. The UE may also identify messages for the data connection received from the network based on the identification information included in such messages.

In some examples, the UE may indicate the identification information to the network when the UE registers to a second system (e.g., 5GS) and/or transfers the PDN connection in a first system (e.g., EPS) to the second system (e.g., 5GS).

In some examples, the first system comprises a system being a legacy system in relation to the second system. As described above, the first system may comprise an EPS and/or the second system may comprise an 5GS. Further examples include that the first system comprises at least one of a 3GPP second generation system, 3GPP third generation system, an IP Multimedia Subsystem, a Mission Critical System (MCS), a Cell Broadcast System, a Public Warning System (PWS).

Thereby, the network assigns the identification information and thus the network slice for the data connection based on the one or more parameters received from the UE in the request message. Accordingly, the data connection can be associated with the identification information of the network slice to which the data connection belongs to.

In some examples of the method shown in FIG. 5, the request message including the one or more parameter is sent by the UE at block 520 in response to determining at block 510 that two or more identification information, each to identify a network slice in the network, are associated with naming information identifying a data network. In other words, the UE determines whether the network needs to assign a network slice (and thus corresponding identification information to identify the network slice for the data connection). In a more general example, the UE determines based on certain criteria whether to include the one or more parameters to guide the selection of the network slice in the request message. The naming information identifying the data network may comprise a single Data Network Name (DNN) in a 5G System (5GS). In another example, the naming information may comprise a name of an access point (also referred to as Access Point Name, APN). That is, the UE may determine that the single DNN mapped to the APN or optionally the APN is used across multiple network slices. Based on the single DNN, a particular network slice among the multiple network slices cannot be (uniquely) identified e.g. by the network.

In the example described above, where the identification information comprises a S-NSSAI to identify the network slice in the network, the UE may determine that two or more S-NSSAIs are associated with the naming information identifying the data network (e.g., the single DNN in 5GS). More specifically, as an example of certain criteria, the UE may determine that the single DNN is associated with a first S-NSSAI in a first rule of a route selection policy (e.g., UE Route Selection Policy, URSP) and a second S-NSSAI different from the first S-NSSAI in a second rule of a route selection policy (e.g., URSP). That is, the single DNN is associated with both the first S-NSSAI and the second S-NSSAI and thus with different URSP rules. In certain cases, the URSPs provided to the UE may explicitly indicate an S-NSSAI within a URSP rule as applicable parameter in EPS. In another example, the UE may determine that an S-NSSAI is indicated as applicable parameter in EPS.

Accordingly, in block 510, the UE determines whether to include the one or more parameters allowing to guide the selection of the network slice at the network in the request message (e.g., the PDN CONNECTIVITY REQUEST message). In response to the determination in block 510 to include the one or more parameters, the UE selects the one or more parameters and generates the request message so as include the selected one or more parameters. At block 520, the UE sends the request message including the selected one or more parameters to the network. Otherwise, in response to the determination in block 510 to not include the one or more parameter (e.g., only one identification information is associated with the naming information identifying the data network and thus the identification information allows to uniquely identify the network slice), the UE generates the request message without the one or more parameters to guide the selection of the network slice at the network. The UE sends the request message without the one or more parameters to the network (not shown in FIG. 5).

Furthermore, in some examples, the UE may apply a timer to determine when to re-send the request message or when to start measures relating to not receiving a response to the request message. For example, the UE may start a timer (not shown in FIG. 5) such as the timer T3482 in response to sending the request message to the network at block 520. Based on the timer (i.e., when the timer elapses without receiving a response to the request message), the UE determines when to re-send the request message or when to start the measures. That is, the UE determines whether the response message to the request message is received from the network before lapse of the timer. Otherwise, when the UE receives the response message from the network at block 530 before the timer elapsed, the timer may be stopped and reset.

In further examples, the UE stores the identification information (e.g., in the at least one memory 202 shown in FIG. 2) in response to receiving the response message from the network at block 530. That is, upon receipt of the response message, the UE stores the identification information included in the response message. The identification information may be stored in association with the data connection in the network slice. If (e.g., in the at least one memory 202) the UE already stored identification information associated with the data connection in the network slice, the UE deletes the stored identification information in response to receiving the response message. That is, the UE deletes stored (old) identification information associated with the data connection before storing the (new) identification information associated with the data connection, which the UE received with the response message. In some examples, the request message may further include information to identify the data connection. The UE then stores the identification information along with the information to identify the data connection.

In the example described above, where the identification information comprises the S-NSSAI to identify the network slice in the network, the UE deletes stored S-NSSAI and identification information to identify the network (e.g., Public Land Mobile Network Identification, PLMN ID), that the stored S-NSSAI relates to, for the data connection such as the PDN connection or PDU session, if any. The deletion is performed by the UE upon receipt of the response message (e.g., the ACTIVATE DEFAULT EPS BEARER CONTEXT REQUEST message) from the network. The UE may also determine if the response message includes identification information for the data connection (e.g., an S-NSSAI and PLMN ID that the S-NSSAI relates to). The UE stores the S-NSSAI and the PLMN ID the S-NSSAI relates to which are provided in the response message (e.g., the ACTIVATE DEFAULT EPS BEARER CONTEXT REQUEST message) and the associated PLMN ID along with the corresponding information to identify the data connection such as a PDN connection ID or a PDU session ID that the UE provided in the request message (e.g., the PDN CONNECTIVITY REQUEST message).

In some examples, at block 540, the UE may use the information to identify the data connection (e.g., the PDN connection ID or the PDU session ID) and the corresponding identification information (e.g., the S-NSSAI) with associated information to identify the network (e.g., the PLMN ID) in accordance with the specification in 3GPP TS 24.501.

As already discussed above, the request message may comprise the PDN CONNECTIVITY REQUEST message. The UE may include the one or more parameters in an information element (IE) of the PDN CONNECTIVITY REQUEST message. Examples of the IE include the protocol configuration options IE of the PDN CONNECTIVITY REQUEST message or the extended protocol configuration options IE of the PDN CONNECTIVITY REQUEST message.

The one or more parameters selected by the UE and included by the UE in the request message may include a domain name such as a full qualified domain name (FQDN) and/or an IP multimedia subsystem (IMS) home network domain name.

In other examples, the one or more parameters include a parameter of a traffic descriptor in a route selection policy (e.g., a UE route selection policy, URSP) or a parameter of a Route Selection Descriptor (RSD) provided to, stored at, or otherwise available to, the UE.

Examples of the parameter of the traffic descriptor include:
i) OS Id + OS App Id
ii) IPv4 remote address
iii) IPv6 remote address/prefix length
iv) Protocol identifier/next header
v) Single remote port
vi) Remote port range
vii) IP 3 tuple
viii) Security parameter index
ix) Type of service/traffic class
x) Flow label
xi) Destination MAC address
xii) 802.1Q C-TAG VID
xiii) 802.1Q S-TAG VID
xiv) 802.1Q C-TAG PCP/DEI
xv) 802.1Q S-TAG PCP/DEI
xvi) Ethertype
xvii) DNN
xviii) Connection capabilities
xix) Destination FQDN
xx) Regular expression
xxi) OS App Id
xxii) Destination MAC address range
If the traffic descriptor also includes the IMS home network domain name as a parameter, the IMS home network domain name may also be used as, or correspond to, the one or more parameter to be included in the request message.

Examples of the parameter of the RSD include:
i. SSC Mode Selection
ii. Network Slice Selection
iii. DNN Selection
iv. PDU Session Type Selection
v. Non-Seamless Offload indication
vi. Access Type preference
vii. Multi-Access preference
viii. Time window
ix. Location criteria
If the RSD also includes an S-NSSAI, the UE may include the S-NSSAI from the RSD in the request message.

Finally, in some examples, the UE may perform one or more of the following determinations: whether the selection of the network slice is applicable (e.g., in EPS), whether the UE supports N1 mode, and/or whether the UE is capable of indicating the identification information (e.g., the S-NSSAI to EPS).

In response to sending the request message, the UE may also receive a reject message (e.g., a PDN CONNECTIVITY REJECT message) from the network. The reject message informs the UE about rejection of the data connection by the network. In response to receiving the reject message, the UE may stop the timer (e.g., T3482) if the timer is used and was started in response to sending the request message.

Accordingly, the selection of the network slice by the network is guided based on the one or more parameters provided by the UE. The network is enabled to assign identification information to identify the selected network slice (e.g., the S-NSSAI) based on the one or more parameters provided by the UE and provide the identification information to the UE. This avoids assigning an incorrect (i.e., wrong) identification information to the network slice, for example, when the UE moves to 5GS and the PDN connection or PDU session is transferred from the EPS.

FIG. 6 illustrates a flow chart of a method for assigning a network slice for a session related to a legacy system according to the claimed embodiment. The method is performed by the network. More specifically, the method may be performed by a base station such as the base station represented by the control apparatus 300 as described above with reference to FIG. 3. The base station may be a serving base station, or a gNB or a transmission/reception point (TRP) in a 5GS. Generally, the method may be performed at a core network function such as AMF.

To the network, a terminal device (e.g., a user equipment, UE) may be connected. For example, the UE may be connected to the two or more different IMS networks through two or more different network slices (e.g., 5G Core network slices) to allow the UE to use different services. For example, the UE may have established data connection(s) such as a Packet Data Network (PDN) connection in an Evolved Packet System (EPS) or a Packet Data Unit (PDU) session. The PDN connection(s) or PDU session(s) established by the UE may be associated with a name of an access point (Access Point Name, APN) via which the UE established the PDN connection(s) or the PDU sessions. Across the network slices, a Data Network Name mapped to the APN (or the APN) may be used. When the UE moves from the EPS to the 5GS (for example), i.e., in case of an inter-system change from the EPS to the 5GS, the PDN connection(s) or PDU session(s) may need to be transferred and associated within the 5GS.

The UE may send to the network a request message for a data connection. The UE is registered to a first system (i.e., a first communication system or legacy system) such as an EPS. In other words, the UE sends the request message while the UE is registered to the first system. The request message is received at the network (e.g., at a base station or by the control apparatus 300) at block 610. As described above, the request message received at the network comprises a PDN CONNECTIVITY REQUEST message. The data connection may be a PDN connection or a PDU session such that the request message is a request for the PDN connection or the PDU session to the network. Further, in order to facilitate associating the data connection within the network, the request message includes one or more parameters guiding a selection of a network slice for the data connection at the network.

At block 620, the network selects identification information to identify the network slice based, at least in part, on the one or more parameters included in the request message. That is, the network determines the identification information of the network slice to which the data connection belongs to and associates the determined identification information with the data connection. In order to facilitate the selection, the network uses the one or more parameters to determine the network slice (e.g., by comparing the one or more parameters with parameters for network slices stored at the network).

For example, the one or more parameters included in the request message comprise a domain name such as a full qualified domain name (FQDN) or an IMS home network domain name. Based on the domain name, the network determines the network slice through which the UE is connected to an IMS network identified by the domain name.

At block 630, the network sends a response message to the UE. The UE may still be registered to the first system. The response message includes the identification information to identify the network slice selected by the network at block 620. As discussed above in more detail, the identification information is used by the UE for indication. More specifically, the UE indicates (e.g., to the network) the identification information upon inter-system change from the first system to a second system (i.e., a second communication system) such as 5GS. That is, the identification information is used to allow identification of the network slice with which the data connection is associated by the network after a change of the registration from the first system to the second system (i.e., in response to an inter-system change from the first system to the second system). That is, the identification information sent to the UE is used by the UE to identify signaling or messaging corresponding to the data connection. This allows to identify the network slice and thus the data network (e.g., the IMS network) to which the network slice and the data connection belongs to. The identification of the network slice may be needed by the network to route the signaling or messaging corresponding to the data connection. In one example, the network may send, as the response message, an ACTIVATE DEFAULT EPS BEARER CONTEXT REQUEST message to the UE.

Thus, the network assigns the identification information and the network slice for the data connection based on the one or more parameters received from the UE in the request message. Accordingly, the data connection can be associated with the identification information of the network slice to which the data connection belongs to.

In some examples, the identification information may comprise a Single Network Slice Selection Assistance Information (S-NSSAI) which is used to (uniquely) identify the network slice in the network. The S-NSSAI may include type information to indicate a type for the network slice or the service (also referred to as Slice/Service Type, SST) and optional differentiator information to differentiate the network slice from other network slices (also referred to as Slice Differentiator, SD).

In examples, the presence of the one or more parameters to guide the selection of the network slice in the request message indicates to the network that the UE determined presence of two or more identification information to identify network slices. For example, the UE may determine that two or more identification information are associated with naming information identifying a data network (e.g., a single Data Network Name, DNN). In response to determining, the UE includes the one or more parameter to guide the selection of the network slice in the request message to be sent to the network. In such examples, the request message received at the network further includes information to identify the data connection (e.g., PDN connection identification information or PDU session identification information).

Thus, the presence of the one or more parameters to guide the selection of the network slice in the request message indicates to the network that the network needs to select the network slice to which the data connection belongs to, avoiding the use of incorrect (i.e., wrong) identification information such as a wrong S-NSSAI. In case the one or more parameters to guide the selection of the network slice are not included in the request message (i.e., absence of the one or more parameters), the network is indicated that no selection of the network slice is needed as, for example, only one identification information is associated with the naming information identifying the data network and thus the identification information allows to uniquely identify the network slice.

In examples, the UE can indicate to the network that the UE supports extended protocol configuration options if the UE supports providing one or more parameters to guide a selection of a network slice. In addition, if the UE supports providing one or more parameters to guide a selection of a network slice, the UE can include the quality of service (QoS) rules with the length of two octets support indicator or the QoS flow descriptions with the length of two octets support indicator, respectively, in the protocol configuration options information element (IE) or the extended protocol configuration options IE during a UE requested PDN connectivity procedure.

As already discussed above, the request message may comprise the PDN CONNECTIVITY REQUEST message. The UE may include the one or more parameters in an IE of the PDN CONNECTIVITY REQUEST message. Examples of the IE include the protocol configuration options IE of the PDN CONNECTIVITY REQUEST message or the extended protocol configuration options IE of the PDN CONNECTIVITY REQUEST message. In other examples, the one or more parameters include a parameter of a traffic descriptor in a route selection policy (e.g., a UE route selection policy, URSP) or a parameter of a Route Selection Descriptor (RSD). Examples of the parameter of the traffic descriptor or the RSD are discussed above with reference to the method of FIG. 5.

According to an example, the traffic descriptor of the route selection policy (i.e., the URSP) may include the IMS home network domain name as a parameter. In this example, the IMS home network domain name may be used as, or correspond to, the one or more parameter to be included in the request message.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer- executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of the subject disclosure as defined in the appended claims.

## Claims

1. A method (500), comprising:
sending, from a terminal device to a network device,
a request message for a data connection including one or more parameters to guide a selection of a network slice while the terminal device is registered to a first system (520);
receiving, from the network device by
the terminal device, a response message including identification information to identify the network slice while the terminal device is registered to the first system (530); and
indicating, by the terminal device, the identification information upon inter-system change to a second system (540),
wherein the one or more parameters include at least one of:
a parameter of a traffic descriptor in a UE route selection policy, URSP;
a parameter of a Route Selection Descriptor, RSD; and
a full qualified domain name, FQDN, or an IP multimedia subsystem, IMS, home network domain name.

2. The method (500) of claim 1, wherein the request message is sent (520) in response to determining, by the terminal device, that two or more identification information, each to identify a network slice in the network, are associated with a single naming information identifying a data network (510).

3. The method (500) of claim 1 or 2, further comprising:
upon receipt of the response message including identification information to identify the network slice (530), deleting, by the terminal device, stored identification information for the data connection in the network slice and storing, by the terminal device, the identification information in association with the data connection in the network slice.

4. The method (500) of any of claims 1-3, wherein the identification information comprises a Single Network Slice Selection Assistance Information, S-NSSAI.

5. The method (500) of any of claims 1-4, wherein the request message comprises a PDN CONNECTIVITY REQUEST message and/or the response message comprises an ACTIVATE DEFAULT EPS BEARER CONTEXT REQUEST message.

6. The method (500) of any of claims 1-5, wherein the terminal device is a user equipment, UE.

7. A method (600), comprising:
receiving, at a network device in a network from a terminal device registered to a first system, a request message for a data connection including one or more parameters to guide a selection of a network slice (610);
selecting, at the network device, identification information to identify the network slice based on the one or more parameters (620); and
sending, from the network device to the terminal device, a response message including the identification information to identify the network slice, the identification information being indicated by the terminal device upon inter-system change to a second system (630),
wherein the one or more parameters include at least one of:
a parameter of a traffic descriptor in a UE route selection policy, URSP;
a parameter of a Route Selection Descriptor, RSD; and
a full qualified domain name, FQDN, or an IP multimedia subsystem, IMS, home network domain name.

8. The method (600) of claim 7, wherein the identification information comprises a Single Network Slice Selection Assistance Information, S-NSSAI.

9. The method (600) of claim 7 or 8, wherein the request message comprises a PDN CONNECTIVITY REQUEST message and/or the response message is an ACTIVATE DEFAULT EPS BEARER CONTEXT REQUEST message.

10. A terminal device (200), comprising:
at least one processor (201); and
at least one memory (202) including computer program code, wherein the computer program code causes the terminal device (200), when executed with the at least one processor (201), to at least:
send, to a network device, a request message for a data connection including one or more parameters to guide a selection of a network slice while the terminal device (200) is registered to a first system;
receive, from the network device, a response message including identification information to identify the network slice while the terminal device (200) is registered to the first system; and
indicate the identification information upon inter-system change to a second system,
wherein the one or more parameters include at least one of:
a parameter of a traffic descriptor in a UE route selection policy, URSP;
a parameter of a Route Selection Descriptor, RSD; and
a full qualified domain name, FQDN, or an IP multimedia subsystem, IMS, home network domain name.

11. A network device (300) in a network, comprising:
at least one processor (302); and
at least one memory (301) including computer program code, wherein the computer program code causes the network device (300), when executed with the at least one processor (302), to at least:
receive, from a terminal device registered to a first system, a request message for a data connection including one or more parameters to guide a selection of a network slice;
select identification information to identify the network slice based on the one or more parameters; and
send, to the terminal device, a response message including the identification information to identify the network slice, the identification information being indicated by the terminal device upon inter-system change to a second system, wherein the one or more parameters include at least one of:
a parameter of a traffic descriptor in a UE route selection policy, URSP;
a parameter of a Route Selection Descriptor, RSD; and
a full qualified domain name, FQDN, or an IP multimedia subsystem, IMS, home network domain name.

12. A computer program product comprising program instructions stored on a computer readable medium to execute the method (500) of any of claims 1 to 6 when said program is executed on a computer of a terminal device.

13. A computer program product comprising program instructions stored on a computer readable medium to execute the method (600) of any of claims 7 to 9 when said program is executed on a computer of a network device.

## Patentansprüche

1. Verfahren (500), umfassend:
Senden, von einer Endeinrichtung an eine Netzwerkeinrichtung, einer Anforderungsnachricht für eine Datenverbindung, die einen oder mehrere Parameter zum Leiten einer Auswahl eines Netzwerk-Slice umfasst, während die Endeinrichtung bei einem ersten System registriert ist (520);
Empfangen, von der Netzwerkeinrichtung durch die Endeinrichtung, einer Antwortnachricht, die eine Identifikationsinformation zum Identifizieren des Netzwerk-Slice umfasst, während die Endeinrichtung bei dem ersten System registriert ist (530); und
Anzeigen, durch die Endeinrichtung, der Identifikationsinformation bei einem systemübergreifenden Wechsel zu einem zweiten System (540),
wobei der eine oder die mehreren Parameter mindestens eines umfassen von:
einem Parameter eines Verkehrsdeskriptors in einer UE-Routenauswahlrichtlinie, URSP;
einem Parameter eines Routenauswahldeskriptors, RSD; und
einem vollständig qualifizierten Domänennamen, FQDN, oder einem Heimnetz-Domänennamen eines IP-Multimedia-Subsystems, IMS.

2. Verfahren (500) nach Anspruch 1, wobei die Anforderungsnachricht (520) als Reaktion auf das Bestimmen, durch die Endeinrichtung, gesendet wird, dass zwei oder mehr Identifikationsinformationen, jeweils zum Identifizieren eines Netzwerk-Slice in dem Netzwerk, mit einer einzigen Benennungsinformation verknüpft sind, die ein Datennetzwerk identifiziert (510).

3. Verfahren (500) nach Anspruch 1 oder 2, ferner umfassend:
bei Empfang der Antwortnachricht, die eine Identifikationsinformation zum Identifizieren des Netzwerk-Slice umfasst (530), Löschen, durch die Endeinrichtung,
einer gespeicherten Identifikationsinformation für die Datenverbindung in dem Netzwerk-Slice und Speichern, durch die Endeinrichtung, der Identifikationsinformation in Verknüpfung mit der Datenverbindung in dem Netzwerk-Slice.

4. Verfahren (500) nach einem der Ansprüche 1 bis 3, wobei die Identifikationsinformation eine Einzel-Netzwerk-Slice-Auswahlunterstützungsinformation, S-NSSAI, umfasst.

5. Verfahren (500) nach einem der Ansprüche 1 bis 4, wobei die Anforderungsnachricht eine PDN CONNECTIVITY REQUEST-Nachricht umfasst und/oder die Antwortnachricht eine ACTIVATE DEFAULT EPS BEARER CONTEXT REQUEST-Nachricht umfasst.

6. Verfahren (500) nach einem der Ansprüche 1 bis 5, wobei die Endeinrichtung ein Benutzergerät, UE, ist.

7. Verfahren (600), umfassend:
Empfangen, an einer Netzwerkeinrichtung in einem Netzwerk von einer bei einem ersten System registrierten Endeinrichtung, einer Anforderungsnachricht für eine Datenverbindung, die einen oder mehrere Parameter zum Leiten einer Auswahl eines Netzwerk-Slice umfasst (610);
Auswählen, an der Netzwerkeinrichtung, einer Identifikationsinformation zum Identifizieren des Netzwerk-Slice auf der Grundlage des einen oder der mehreren Parameter (620); und
Senden, von der Netzwerkeinrichtung an die Endeinrichtung, einer Antwortnachricht, die die Identifikationsinformation zum Identifizieren des Netzwerk-Slice umfasst, wobei die Identifikationsinformation durch die Endeinrichtung bei einem systemübergreifenden Wechsel zu einem zweiten System angezeigt wird (630),
wobei der eine oder die mehreren Parameter mindestens eines umfassen von:
einem Parameter eines Verkehrsdeskriptors in einer UE-Routenauswahlrichtlinie, URSP;
einem Parameter eines Routenauswahldeskriptors, RSD; und
einem vollständig qualifizierten Domänennamen, FQDN, oder einem Heimnetz-Domänennamen eines IP-Multimedia-Subsystems, IMS.

8. Verfahren (600) nach Anspruch 7, wobei die Identifikationsinformation eine Einzel-Netzwerk-Slice-Auswahlunterstützungsinformation, S-NSSAI, umfasst.

9. Verfahren (600) nach Anspruch 7 oder 8, wobei die Anforderungsnachricht eine PDN CONNECTIVITY REQUEST-Nachricht umfasst und/oder die Antwortnachricht eine ACTIVATE DEFAULT EPS BEARER CONTEXT REQUEST-Nachricht ist.

10. Endeinrichtung (200), umfassend:
mindestens einen Prozessor (201); und
mindestens einen Speicher (202), der einen Computerprogrammcode umfasst, wobei der Computerprogrammcode die Endeinrichtung (200), wenn er mit dem mindestens einen Prozessor (201) ausgeführt wird, veranlasst, mindestens:
an eine Netzwerkeinrichtung eine Anforderungsnachricht für eine Datenverbindung zu senden, die einen oder mehrere Parameter zum Leiten einer Auswahl eines Netzwerk-Slice umfasst, während die Endeinrichtung (200) bei einem ersten System registriert ist;
von der Netzwerkeinrichtung eine Antwortnachricht zu empfangen, die eine Identifikationsinformation zum Identifizieren des Netzwerk-Slice umfasst, während die Endeinrichtung (200) bei dem ersten System registriert ist; und
die Identifikationsinformation bei einem systemübergreifenden Wechsel zu einem zweiten System anzuzeigen,
wobei der eine oder die mehreren Parameter mindestens eines umfassen von:
einem Parameter eines Verkehrsdeskriptors in einer UE-Routenauswahlrichtlinie, URSP;
einem Parameter eines Routenauswahldeskriptors, RSD; und
einem vollständig qualifizierten Domänennamen, FQDN, oder einem Heimnetz-Domänennamen eines IP-Multimedia-Subsystems, IMS.

11. Netzwerkeinrichtung (300) in einem Netzwerk, umfassend:
mindestens einen Prozessor (302); und
mindestens einen Speicher (301), der einen Computerprogrammcode umfasst, wobei der Computerprogrammcode die Netzwerkeinrichtung (300), wenn er mit dem mindestens einen Prozessor (302) ausgeführt wird, veranlasst, mindestens:
von einer bei einem ersten System registrierten Endeinrichtung eine Anforderungsnachricht für eine Datenverbindung zu empfangen, die einen oder mehrere Parameter zum Leiten einer Auswahl eines Netzwerk-Slice umfasst;
eine Identifikationsinformation zum Identifizieren des Netzwerk-Slice auf der Grundlage des einen oder der mehreren Parameter auszuwählen; und
an die Endeinrichtung eine Antwortnachricht zu senden, die die Identifikationsinformation zum Identifizieren des Netzwerk-Slice umfasst, wobei die Identifikationsinformation durch die Endeinrichtung bei einem systemübergreifenden Wechsel zu einem zweiten System angezeigt wird,
wobei der eine oder die mehreren Parameter mindestens eines umfassen von:
einem Parameter eines Verkehrsdeskriptors in einer UE-Routenauswahlrichtlinie, URSP;
einem Parameter eines Routenauswahldeskriptors, RSD; und
einem vollständig qualifizierten Domänennamen, FQDN, oder einem Heimnetz-Domänennamen eines IP-Multimedia-Subsystems, IMS.

12. Computerprogrammprodukt, das Programmanweisungen umfasst, die auf einem computerlesbaren Medium gespeichert sind, um das Verfahren (500) nach einem der Ansprüche 1 bis 6 auszuführen, wenn das Programm auf einem Computer einer Endeinrichtung ausgeführt wird.

13. Computerprogrammprodukt, das Programmanweisungen umfasst, die auf einem computerlesbaren Medium gespeichert sind, um das Verfahren (600) nach einem der Ansprüche 7 bis 9 auszuführen, wenn das Programm auf einem Computer einer Netzwerkeinrichtung ausgeführt wird.

## Revendications

1. Procédé (500), comprenant :
l'envoi, d'un dispositif terminal à un dispositif de réseau, d'un message de requête pour une connexion de données comprenant un ou plusieurs paramètres pour guider une sélection d'une tranche de réseau alors que le dispositif terminal est enregistré auprès d'un premier système (520) ;
la réception, en provenance du dispositif de réseau par le dispositif terminal, d'un message de réponse comprenant une information d'identification pour identifier la tranche de réseau alors que le dispositif terminal est enregistré auprès du premier système (530) ; et
l'indication, par le dispositif terminal, de l'information d'identification lors d'un changement inter-système vers un second système (540),
dans lequel les un ou plusieurs paramètres comprennent au moins l'un parmi :
un paramètre d'un descripteur de trafic dans une politique de sélection de route d'UE, URSP ;
un paramètre d'un descripteur de sélection de route, RSD ; et
un nom de domaine pleinement qualifié, FQDN, ou un nom de domaine de réseau domestique de sous-système multimédia IP, IMS.

2. Procédé (500) selon la revendication 1, dans lequel le message de requête est envoyé (520) en réponse à la détermination, par le dispositif terminal, que deux ou plusieurs informations d'identification, chacune pour identifier une tranche de réseau dans le réseau, sont associées à une information de dénomination unique identifiant un réseau de données (510).

3. Procédé (500) selon la revendication 1 ou 2, comprenant en outre :
lors de la réception du message de réponse comprenant une information d'identification pour identifier la tranche de réseau (530), la suppression, par le dispositif terminal, d'une information d'identification stockée pour la connexion de données dans la tranche de réseau et le stockage, par le dispositif terminal, de l'information d'identification en association avec la connexion de données dans la tranche de réseau.

4. Procédé (500) selon l'une quelconque des revendications 1 à 3, dans lequel l'information d'identification comprend une information d'assistance à la sélection de tranche de réseau unique, S-NSSAI.

5. Procédé (500) selon l'une quelconque des revendications 1 à 4, dans lequel le message de requête comprend un message PDN CONNECTIVITY REQUEST et/ou le message de réponse comprend un message ACTIVATE DEFAULT EPS BEARER CONTEXT REQUEST.

6. Procédé (500) selon l'une quelconque des revendications 1 à 5, dans lequel le dispositif terminal est un équipement utilisateur, UE.

7. Procédé (600), comprenant :
la réception, au niveau d'un dispositif de réseau dans un réseau en provenance d'un dispositif terminal enregistré auprès d'un premier système, d'un message de requête pour une connexion de données comprenant un ou plusieurs paramètres pour guider une sélection d'une tranche de réseau (610) ;
la sélection, au niveau du dispositif de réseau, d'une information d'identification pour identifier la tranche de réseau sur la base des un ou plusieurs paramètres (620) ; et
l'envoi, du dispositif de réseau au dispositif terminal, d'un message de réponse comprenant l'information d'identification pour identifier la tranche de réseau,
l'information d'identification étant indiquée par le dispositif terminal lors d'un changement inter-système vers un second système (630),
dans lequel les un ou plusieurs paramètres comprennent au moins l'un parmi :
un paramètre d'un descripteur de trafic dans une politique de sélection de route d'UE, URSP ;
un paramètre d'un descripteur de sélection de route, RSD ; et un nom de domaine pleinement qualifié, FQDN, ou un nom de domaine de réseau domestique de sous-système multimédia IP, IMS.

8. Procédé (600) selon la revendication 7, dans lequel l'information d'identification comprend une information d'assistance à la sélection de tranche de réseau unique, S-NSSAI.

9. Procédé (600) selon la revendication 7 ou 8, dans lequel le message de requête comprend un message PDN CONNECTIVITY REQUEST et/ou le message de réponse est un message ACTIVATE DEFAULT EPS BEARER CONTEXT REQUEST.

10. Dispositif terminal (200), comprenant :
au moins un processeur (201) ; et
au moins une mémoire (202) comprenant un code de programme informatique, dans lequel le code de programme informatique amène le dispositif terminal (200), lorsqu'il est exécuté avec l'au moins un processeur (201), à au moins :
envoyer, à un dispositif de réseau, un message de requête pour une connexion de données comprenant un ou plusieurs paramètres pour guider une sélection d'une tranche de réseau alors que le dispositif terminal (200) est enregistré auprès d'un premier système ;
recevoir, en provenance du dispositif de réseau, un message de réponse comprenant une information d'identification pour identifier la tranche de réseau alors que le dispositif terminal (200) est enregistré auprès du premier système ; et
indiquer l'information d'identification lors d'un changement inter-système vers un second système,
dans lequel les un ou plusieurs paramètres comprennent au moins l'un parmi :
un paramètre d'un descripteur de trafic dans une politique de sélection de route d'UE, URSP ;
un paramètre d'un descripteur de sélection de route, RSD ; et
un nom de domaine pleinement qualifié, FQDN, ou un nom de domaine de réseau domestique de sous-système multimédia IP, IMS.

11. Dispositif de réseau (300) dans un réseau, comprenant :
au moins un processeur (302) ; et
au moins une mémoire (301) comprenant un code de programme informatique, dans lequel le code de programme informatique amène le dispositif de réseau (300), lorsqu'il est exécuté avec l'au moins un processeur (302), à au moins :
recevoir, en provenance d'un dispositif terminal enregistré auprès d'un premier système, un message de requête pour une connexion de données comprenant un ou plusieurs paramètres pour guider une sélection d'une tranche de réseau ;
sélectionner une information d'identification pour identifier la tranche de réseau sur la base des un ou plusieurs paramètres ; et
envoyer, au dispositif terminal, un message de réponse comprenant l'information d'identification pour identifier la tranche de réseau, l'information d'identification étant indiquée par le dispositif terminal lors d'un changement inter-système vers un second système,
dans lequel les un ou plusieurs paramètres comprennent au moins l'un parmi :
un paramètre d'un descripteur de trafic dans une politique de sélection de route d'UE, URSP ;
un paramètre d'un descripteur de sélection de route, RSD ; et un nom de domaine pleinement qualifié, FQDN, ou un nom de domaine de réseau domestique de sous-système multimédia IP, IMS.

12. Produit programme informatique comprenant des instructions de programme stockées sur un support lisible par ordinateur pour exécuter le procédé (500) selon l'une quelconque des revendications 1 à 6 lorsque ledit programme est exécuté sur un ordinateur d'un dispositif terminal.

13. Produit programme informatique comprenant des instructions de programme stockées sur un support lisible par ordinateur pour exécuter le procédé (600) selon l'une quelconque des revendications 7 à 9 lorsque ledit programme est exécuté sur un ordinateur d'un dispositif de réseau.
